# EUROPÄISCHE PATENTSCHRIFT

(11) **EP 1 918 146 B1**
(45) Veröffentlichungstag und Bekanntmachung des Hinweises auf die Patenterteilung: **27.04.2011**
(21) Anmeldenummer: 07021092.7
(22) Anmeldetag: 29.10.2007
(51) Int. Cl.: B60J 7/20

(54) **Cabriolet-Kraftfahrzeug**
Cabriolet Vehicle
Véhicule automobile de type cabriolet

(30) Priorität: 04.11.2006 DE 102006052073
(43) Veröffentlichungstag der Anmeldung: 07.05.2008
(73) Patentinhaber: Dr. Ing. h.c. F. Porsche AG, 70435 Stuttgart (DE)
(72) Erfinder: Froeschle, Mathias, 73760 Ostfildern (DE); Liebhardt, Randolf, 71120 Grafenau (DE)

(56) Entgegenhaltungen:
- DE-A1- 3 623 468
- DE-A1- 10 234 350
- DE-A1- 19 845 178
- DE-U1- 29 721 731
- DE-U1- 29 812 164
- US-A- 2 845 299

## Beschreibung

Die Erfindung betrifft ein Cabriolet-Kraftfahrzeug nach dem Oberbegriff des Patentanspruchs 1,

Aus der DE 297 21 731 U1 ist ein solches Cabriolet-Fahrzeug bekannt. Es besitzt einen Verdeckkasten, der durch einen Verdeckkastendeckel verschließbar ist. An dem Verdeckkastendeckel ist eine deckelfeste Führungsschiene befestigt, die mit einer karosseriefesten Führungsschiene über eine Hub- und Verschiebemechanik gekoppelt ist. In der deckelfesten Führungsschiene ist ein deckelseitiges Ende eines Ausstellhebels geführt und ein karosserieseitiges Ende des Ausstellhebels ist an einer karosseriefesten Lagerstelle schwenkbar angebracht.

Aus der gattungsgemäßen DE 36 23 468 A1 ist ebenfalls ein Cabriolet-Kraftfahrzeug bekannt, welches einen Verdeckkasten aufweist, der durch einen Verdeckkastendeckel verschließbar ist. Eine karosserieseitige und eine deckelfeste Führungsschiene sind bei diesem Cabriolet Fahrzeug über eine aufwändige Hebel- und Lenkerkonstruktion verbunden, deren Enden in jeweils zumindest einer Führungsschiene geführt sind.

Aus der deutschen Patentschrift DE 198 45 178 B4 ist es bekannt, einen Verdeckkastendeckel mit Hilfe einer deckelfesten Lauf- beziehungsweise Tragschiene an einer Fahrzeugkarosserie anzulenken. Aus der deutschen Patentschrift DE 100 28 405 B4 ist eine Kofferraumdeckelanordnung mit einem Stützarm bekannt, der an seinem vorderen Ende eine Rolle aufweist, die in einer Bahn aufgenommen ist. Aus dem US-Patent US 2,845,299 ist ein weiterer Verdeckkasten-Mechanismus bekannt.

Aufgabe der Erfindung ist es, ein Cabriolet-Kraftfahrzeug gemäß dem Oberbegriff des Anspruchs 1 mit einer einfach ausgeführten Hub- und Verschiebemechanik im Hinblick auf die Bewegung des Verdeckkastendeckels zu optimieren.

Die Aufgabe ist bei einem Cabriolet-Kraftfahrzeug mit einem Verdeckkasten, der durch einen Verdeckkastendeckel verschließbar ist, an dem mindestens eine deckelfeste Führungsschiene befestigt ist, dadurch gelöst, dass ein Ende eines deckelfesten Führungsarms in der karosseriefesten Führungsschiene geführt ist, wobei der deckelfeste Führungsarm vorzugsweise gekrümmt ausgebildet ist, und dass der Ausstellhebel in der deckelfesten Führungsschiene so lange blockiert ist, bis dieser im ausgestelltem Zustand einen karosserieseitigen Anschlag erreicht. Erst dann kann der Verdeckkastendeckel in Fahrzeuglängsrichtung in den beiden Führungsschienen nach hinten verschoben werden. Durch die Kombination der deckelfesten Führungsschiene mit der karosseriefesten Führungsschiene kann die Öffnungsbewegung des Verdeckkastendeckels auf einfache Art und Weise mit einem flachen Bewegungsablauf und geringem Abstand zur Karosserie ausgeführt werden. Die Kopplung zwischen den beiden Führungsschienen wird durch eine kombinierte Hub- und Verschiebemechanik erreicht. Außerdem ist in der deckelfesten Führungsschiene ein deckelseitiges Ende eines

Ausstellhebels geführt. Der Ausstellhebel ermöglicht ein Anheben des Verdeckkastendeckels aus seiner geschlossenen Stellung. Ferner ist ein karosserieseitiges Ende des Ausstellhebels an einer karosseriefesten Lagerstelle schwenkbar angebracht.

Ein weiteres bevorzugtes Ausführungsbeispiel des Cabriolet-Kraftfahrzeugs ist dadurch gekennzeichnet, dass das deckelseitige Ende des Ausstellhebels an ein Gleitelement angelenkt ist, das in oder an der deckelfesten Führungsschiene verschiebbar geführt ist. Das Gleitelement ist entlang der deckelfesten Führungsschiene bewegbar.

Die karosseriefeste Lagerstelle ist nach einem Ausführungsbeispiel in Fahrzeuglängsrichtung hinter der karosseriefesten Führungsschiene angeordnet.

Ein weiteres bevorzugtes Ausführungsbeispiel des Cabriolet-Kraftfahrzeugs ist dadurch gekennzeichnet, dass das Ende des deckelfesten Führungsarms an ein Gleitelement angelenkt ist, das in oder an der karosseriefesten Führungsschiene verschiebbar geführt ist. Das Gleitelement ist entlang der karosseriefesten Führungsschiene bewegbar.

Ein weiteres bevorzugtes Ausführungsbeispiel des Cabriolet-Kraftfahrzeugs ist dadurch gekennzeichnet, dass der deckelfeste Führungsarm an dem in Fahrzeuglängsrichtung vorderen Ende des Verdeckkastendeckels befestigt ist. Der deckelfeste Führungsarm geht von der Unterseite des Verdeckkastendeckels aus.

Ein weiteres bevorzugtes Ausführungsbeispiel des Cabriolet-Kraftfahrzeugs ist dadurch gekennzeichnet, dass die beiden Führungsschienen etwa parallel zueinander angeordnet sind. Vorzugsweise verlaufen die beiden Führungsschienen etwa horizontal oder waagerecht.

Ein weiteres bevorzugtes Ausführungsbeispiel des Cabriolet-Kraftfahrzeugs ist dadurch gekennzeichnet, dass die karosseriefeste Führungsschiene an ihrem in Fahrzeuglängsrichtung vorderen Ende insbesondere nach unten gekrümmt ist. Dadurch wird der Verdeckkastendeckel zuerst angehoben und danach in seine geöffnete Stellung verschoben. Vorteilhaft ist hierbei, dass der Verdeckkastendeckel aus der geschlossenen Stellung von einer Dichtung an der Karosserie abgehoben wird und diese dabei in ihrer Wirkrichtung beaufschlagt wird. Erst nach dem Ausheben kann der Verdeckkastendeckel parallel zu den beiden Führungsschienen in Fahrzeuglängsrichtung nach hinten verschoben werden.

Ein weiteres bevorzugtes Ausführungsbeispiel des Cabriolet-Kraftfahrzeugs ist dadurch gekennzeichnet, dass die deckelfeste Führungsschiene an der Unterseite des Verdeckkastendeckels befestigt ist. Vorzugsweise ist an beiden Seiten des Verdeckkastendeckels jeweils eine Führungsschiene befestigt, der jeweils eine karosseriefeste Führungsschiene zugeordnet ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Fig. 1: eine schematische Darstellung eines Mechanismus zur Anbindung eines Verdeckkastendeckels an eine Fahrzeugkarosserie;
- Fig. 2: einen Ausschnitt eines Cabriolet-Kraftfährzeugs mit einem Verdeckkastendeckel in der geschlossenen Stellung und
- Fig. 3: das Cabriolet-Kraftfahrzeug aus Fig. 2 mit dem Verdeckkastendeckel in der geöffneten Stellung.

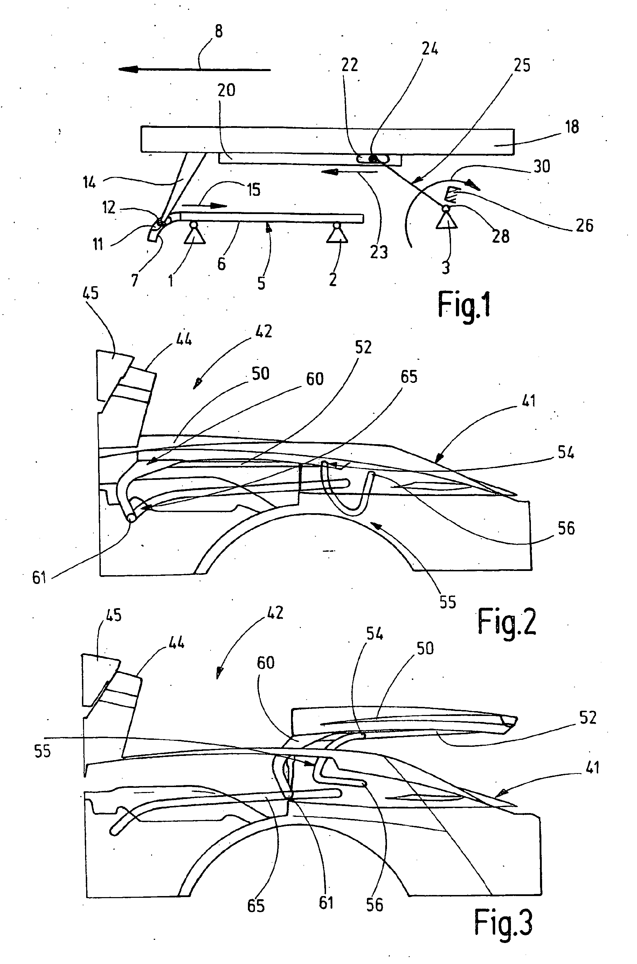

In Figur 1 sind drei karosseriefeste Lagerstellen 1, 2, 3 schematisch dargestellt. Die karosseriefesten Lagerstellen 1, 2, 3 sind an der Karosserie oder Tragstruktur des Cabriolet-Kraftfahrzeugs befestigt. An den karosseriefesten Lagerstellen 1 und 2 ist eine karosseriefeste Führungsschiene 5 befestigt. Die karosseriefeste Führungsschiene 5 weist einen linearen Abschnitt 6 und an ihrem vorderen Ende einen gekrümmten Abschnitt 7 auf. Der lineare Abschnitt 6 verläuft in horizontaler oder waagerechter Richtung. Der gekrümmte Abschnitt 7 ist an dem in Fahrzeuglängsrichtung vorderen Ende nach unten gekrümmt. Die Fahrzeuglängsrichtung ist in Figur 1 durch einen Pfeil 8 bezeichnet.

In der karosseriefesten Führungsschiene 5 ist ein Gleitelement 11 entlang der karosseriefesten Führungsschiene 5 bewegbar geführt. An das Gleitelement 11 ist ein Ende 12 eines Führungsarms 14 angelenkt, der an der Unterseite eines Verdeckkastendeckels 18 befestigt ist und daher auch als deckelfester Führungsarm 14 bezeichnet wird. Durch einen Pfeil 15 ist die Richtung angedeutet, in der sich das Gleitelement 11 zusammen mit dem Führungsarm 14 und dem Verdeckkastendeckel 18 bewegt, wenn der Verdeckkastendeckel 18 aus der in Figur 1 dargestellten Stellung in seine geöffnete Stellung bewegt wird.

An der Unterseite des Verdeckkastendeckels 18 ist eine Führungsschiene 20 befestigt, die auch als deckelfeste Führungsschiene 20 bezeichnet wird. Die deckelfeste Führungsschiene 20 erstreckt sich in horizontaler oder waagerechter Richtung parallel zu der karosseriefesten Führungsschiene 5. In der deckelfesten Führungsschiene 20 ist ein Gleitelement 22 geführt. Durch einen Pfeil 23 ist die Bewegungsrichtung angedeutet, in der sich das Gleitelement 22 bewegt, wenn der Verdeckkastendeckel 18 aus der in Figur 1 dargestellten geschlossenen Stellung in seine geöffnete Stellung bewegt wird.

An das Gleitelement 22 ist ein deckelseitiges Ende 24 eines Ausstellhebels 25 angelenkt. Das andere Ende 28, das auch als karosserieseitiges Ende 28 bezeichnet wird, des Ausstellhebels 25 ist an die karosseriefeste Lagerstelle 3 angelenkt. Durch einen Pfeil 30 ist angedeutet, dass sich der Ausstellhebel 25 im Uhrzeigersinn um die karosseriefeste Lagerstelle 3 bis zu einem karosseriefesten Anschlag 26 herum bewegt, wenn der Verdeckkastendeckel 18 geöffnet wird. Der Führungsarm 14 und der Ausstellhebel 25 bilden -in Verbindung mit den Führungsschienen 5 und 20, insbesondere mit dem gekrümmten Abschnitt 7- eine kombinierte Hub- und Verschiebemechanik für den Verdeckkastendeckel 18.

Der Ausstellhebel 25 ist mit dem Gleitelement 22 in der deckelseitigen Führungsschiene 20 solange blockiert, bis der Ausstellhebel 25 einen karosserieseitigen oder karosseriefesten Anschlag 26 erreicht. Die Bewegung des Gleitelements 11 in dem gekrümmten Abschnitt 7 dient dazu, den Verdeckkastendeckel 18 aus seiner geschlossenen Stellung auszuheben. Sobald der Ausstellhebel 25 seinen karosserieseitigen Anschlag 26 erreicht, wird der Verdeckkastendeckel 18 parallel zu den Führungsschienen 5, 20 nach hinten verschoben. Dabei gleiten die Gleitelemente 11 und 22 relativ zu den zugehörigen Führungsschienen 5, 20 in die durch Pfeile 15 und 23 angegebenen Richtungen.

In den Figuren 2 und 3 ist der Heckbereich 41 eines Cabriolet-Kraftfahrzeugs 42 schematisch von der Seite dargestellt. Das Cabriolet-Kraftfahrzeug 42 umfasst eine feststehende Überrollschutzeinrichtung 44 und ein Verdeck 45. Das Verdeck 45 weist vorzugsweise mehrere Verdeckabschnitte auf, die in einem Verdeckkasten ablegbar sind, der in Fahrzeuglängsrichtung hinter der Überrollschutzeinrichtung 44 angeordnet ist.

Der Verdeckkasten ist nach oben hin durch einen Verdeckkastendeckel 50 verschließbar, der in Figur 2 in seiner geschlossenen Stellung und in Figur 3 in seiner geöffneten Stellung dargestellt ist. Die Bewegung des Verdeckkastendeckels 50 ist durch den gleichen Mechanismus geführt, der in Figur 1 schematisch dargestellt ist.

An dem Verdeckkastendeckel 50 ist eine deckelfeste Führungsschiene 52 befestigt. In der deckelfesten Führungsschiene 52 ist ein deckelseitiges Ende 54 eines Ausstellhebels 55 geführt. Das karosserieseitige Ende 56 des Ausstellhebels 55 ist an eine Tragstruktur oder Karosserie des Cabriolet-Kraftfahrzeugs 42 angelenkt.

Von dem Verdeckkastendeckel 50 geht ein Führungsarm 60 aus, dessen freies Ende 61 in einer karosseriefesten Führungsschiene 65 geführt ist. Der Führungsarm 60 ist fest mit dem Verdeckkastendeckel 50 verbunden. In den Figuren 2 und 3 sieht man, dass die Führungsschienen 52, 65 nicht genau parallel zueinander angeordnet sein müssen. Des Weiteren müssen die Führungsschienen 52, 65 nicht genau horizontal oder waagerecht angeordnet sein. Wesentlich ist, dass der Führungsarm 60 im Bereich des vorderen Endes des Verdeckkastendeckels 50 angeordnet ist. Des Weiteren ist es wesentlich, dass das vordere Ende der karosseriefesten Führungsschiene 65 nach unten gekrümmt ausgebildet ist.

## Patentansprüche

1. Cabriolet-Kraftfahrzeug mit einem Verdeckkasten, der durch einen Verdeckkastendeckel (18;50) verschließbar ist, an dem mindestens eine deckelfeste Führungsschiene (20;52) befestigt ist, die mit einer karosseriefesten Führungsschiene (5;65) über eine Hub- und Verschiebemechanik gekoppelt ist, wobei in der deckelfesten Führungsschiene (20;52) ein deckelseitiges Ende (24;54) eines Ausstellhebels (25;55) geführt und ein karosserieseitiges Ende (28;56) des Ausstellhebels (25;55) an einer karosseriefesten Lagerstelle (3) schwenkbar angebracht ist **dadurch gekennzeichnet, dass** ein Ende (12;61) eines deckelfesten Führungsarms (14;60) in der karosseriefesten Führungsschiene (5;65) geführt ist und dass der Ausstellhebel (25;55) in der deckelfesten Führungsschiene (20;52) so lange blockiert ist, bis der Ausstellhebel (25;55) im ausgestellten Zustand einen karosserieseitigen Anschlag (26) erreicht.

2. Cabriolet-Kraftfahrzeug nach Anspruch 1, **dadurch gekennzeichnet, dass** das deckelseitige Ende (24) des Ausstellhebels (25; 55) an ein Gleitelement (22) angelenkt ist, das in oder an der deckelfesten Führungsschiene (20) verschiebbar geführt ist.

3. Cabriolet-Kraftfahrzeug nach Anspruch 1, **dadurch gekennzeichnet, dass** das Ende (12) des deckelfesten Führungsarms (14) an ein Gleitelement (11) angelenkt ist, das in oder an der karosseriefesten Führungsschiene (5) verschiebbar geführt ist.

4. Cabriolet-Kraftfahrzeug nach Anspruch 1 oder 3, **dadurch gekennzeichnet, dass** der deckelfeste Führungsarm (14;60) an dem in Fahrzeuglängsrichtung vorderen Ende des Verdeckkastendeckels (18;50) befestigt ist.

5. Cabriolet-Kraftfahrzeug nach Anspruch 1, **dadurch gekennzeichnet, dass** die beiden Führungsschienen (5, 20;52,65) etwa parallel zueinander angeordnet sind.

6. Cabriolet-Kraftfahrzeug nach Anspruch 1 oder 3, **dadurch gekennzeichnet, dass** die karosseriefeste Führungsschiene (5;65) an ihrem in Fahrzeuglängsrichtung vorderen Ende insbesondere nach unten gekrümmt ist.

7. Cabriolet-Kraftfahrzeug nach Anspruch 1, **dadurch gekennzeichnet, dass** die deckelfeste Führungsschiene (20;52) an der Unterseite des Verdeckkastendeckels (18;50) befestigt ist.

8. Cabriolet-Fahrzeug nach Anspruch 1, **dadurch gekennzeichnet, dass** die karosseriefeste Lagerstelle (3) - in Fahrzeuglängsrichtung gesehen - hinter der karosseriefesten Führungsschiene (5;65) angeordnet ist.

## Claims

1. Cabriolet motor vehicle having a folding-top compartment which can be closed off by means of a folding-top compartment cover (18;50) to which is fastened at least one guide rail (20;52) fixed to the cover, said guide rail (20;52) being coupled by means of a lifting and displacement mechanism to a guide rail (5;65) fixed to a body, a cover-side end (24;54) of a setting-out lever (25;55) being guided in the guide rail (20;52) fixed to the cover, and a body-side end (28;56) of the setting-out lever (25;55) being pivotably attached to a bearing point (3) fixed to the body, **characterized in that** one end (12;61) of a guide arm (14;60) fixed to the cover is guided in the guide rail (5;65) fixed to the body, and **in that** the setting-out lever (25;55) is blocked in the guide rail (20;52) fixed to the cover until the setting-out lever (25;55), in the set-out state, arrives at a body-side stop (26).

2. Cabriolet motor vehicle according to Claim 1, **characterized in that** the cover-side end (24) of the setting-out lever (25; 55) is articulatedly connected to a sliding element (22) which is movably guided in or on the guide rail (20) fixed to the cover.

3. Cabriolet motor vehicle according to Claim 1, **characterized in that** the end (12) of the guide arm (14) fixed to the cover is articulatedly connected to a sliding element (11) which is movably guided in or on the guide rail (5) fixed to the body.

4. Cabriolet motor vehicle according to Claim 1 or 3, **characterized in that** the guide arm (14;60) fixed to the cover is fastened to that end of the folding-top compartment cover (18;50) which is at the front in the vehicle longitudinal direction.

5. Cabriolet motor vehicle according to Claim 1, **characterized in that** the two guide rails (5,20;52,65) are arranged approximately parallel to one another.

6. Cabriolet motor vehicle according to Claim 1 or 3, **characterized in that** the guide rail (5;65) fixed to the body is curved, in particular downward, at its end which is at the front in the vehicle longitudinal direction.

7. Cabriolet motor vehicle according to Claim 1, **characterized in that** the guide rail (20;52) fixed to the cover is fastened to the underside of the folding-top compartment cover (18;50).

8. Cabriolet motor vehicle according to Claim 1, **characterized in that** the bearing point (3) fixed to the body is arranged - as viewed in the vehicle longitudinal direction - behind the guide rail (5;65) fixed to the body.

## Revendications

1. Véhicule automobile de type cabriolet avec un caisson couvrant qui peut être fermé par un cache de caisson couvrant (18 ; 50) au niveau duquel au moins un rail de guidage (20 ; 52) fixe par rapport au cache est fixé, ledit rail étant couplé à un rail de guidage (5 ; 65) fixe par rapport à la carrosserie par le biais d'un mécanisme de levage et de coulissement, une extrémité (24 ; 54) située côté cache d'un levier à action sortante (25 ; 55) étant guidée dans le rail de guidage (20 ; 52) fixe par rapport au cache et une extrémité (28 ; 56) située côté carrosserie du levier à action sortante (25 ; 55) étant amenée de façon pivotante à un point d'appui (3) fixe par rapport à la carrosserie, **caractérisé en ce qu'**une extrémité (12 ; 61) d'un bras de guidage (14 ; 60) fixe par rapport au cache est guidée dans le rail de guidage (5 ; 65) fixe par rapport à la carrosserie et que le levier à action sortante (25 ; 55) est bloqué dans le rail de guidage (20 ; 52) fixe par rapport au cache jusqu'à ce que le levier à action sortante (25 ; 55) ait atteint, à l'état sorti, une butée (26) située côté carrosserie.

2. Véhicule automobile de type cabriolet selon la revendication 1, **caractérisé en ce que** l'extrémité (24) située côté cache du levier à action sortante (25 ; 55) est articulée à un élément de glissement (22) qui est guidé de façon coulissante dans le rail de guidage (20) fixe par rapport au cache ou au niveau de celui-ci.

3. Véhicule automobile de type cabriolet selon la revendication 1, **caractérisé en ce que** l'extrémité (12) du bras de guidage (14) fixe par rapport au cache est articulée à un élément de glissement (11) qui est guidé de façon coulissante dans le rail de guidage (5) fixe par rapport à la carrosserie ou au niveau de celui-ci.

4. Véhicule automobile de type cabriolet selon la revendication 1 ou 3, **caractérisé en ce que** le bras de guidage (14 ; 60) fixe par rapport au cache est fixé au niveau de l'extrémité avant du cache de caisson couvrant (18 ; 50) orientée dans la direction longitudinale du véhicule.

5. Véhicule automobile de type cabriolet selon la revendication 1, **caractérisé en ce que** les deux rails de guidage (5, 20 ; 52, 65) sont disposés approximativement parallèlement l'un par rapport à l'autre.

6. Véhicule automobile de type cabriolet selon la revendication 1 ou 3, **caractérisé en ce que** le rail de guidage (5 ; 65) fixe par rapport à la carrosserie est incurvé au niveau de son extrémité avant orientée dans la direction longitudinale du véhicule, notamment vers le bas.

7. Véhicule automobile de type cabriolet selon la revendication 1, **caractérisé en ce que** le rail de guidage (20 ; 52) fixe par rapport au cache est fixé au niveau du côté inférieur du cache de caisson couvrant (18 ; 50).

8. Véhicule automobile de type cabriolet selon la revendication 1, **caractérisé en ce que** le point d'appui (3) fixe par rapport à la carrosserie est disposé - vu dans la direction longitudinale du véhicule - derrière le rail de guidage (5 ; 65) fixe par rapport à la carrosserie.
